Europäisches Patentamt

European Patent Office

Office européen des brevets

(11) Veröffentlichungsnummer: **0 350 516 B1**

# (12) EUROPÄISCHE PATENTSCHRIFT

(45) Veröffentlichungstag der Patentschrift: **09.12.92**

(21) Anmeldenummer: **88111050.6**

(22) Anmeldetag: **11.07.88**

(51) Int. Cl.⁵: **B23Q 3/12**

(54) **Spannfutter-Schnellwechseleinrichtung.**

(43) Veröffentlichungstag der Anmeldung:
**17.01.90 Patentblatt 90/03**

(45) Bekanntmachung des Hinweises auf die
Patenterteilung:
**09.12.92 Patentblatt 92/50**

(84) Benannte Vertragsstaaten:
**DE FR IT**

(56) Entgegenhaltungen:
**EP-A- 0 238 373**
**EP-A- 0 274 932**
**DE-C- 3 540 367**

(73) Patentinhaber: **Firma Wilhelm Blessing**
**Hermann-Löns-Strasse 17**
**W-7302 Ostfildern 2-Nellingen(DE)**

(72) Erfinder: **Blessing, Hermann**
**Hölderlinstrasse**
**W-7302 Ostfildern 2(DE)**

(74) Vertreter: **Raeck, Wilfrid, Dipl.-Ing.**
**Moserstrasse 8**
**W-7000 Stuttgart 1(DE)**

Rank Xerox (UK) Business Services

## Beschreibung

Die Erfindung betrifft eine Spannfutter-Schnellwechseleinrichtung für eine hohlzylindrische Spindel, mit einer in der Spindel von einem Betätigungsrohr verschiebbaren Riegelhülse mit geneigten Gleitflächen zur Betätigung von radial beweglichen Riegelbolzen für die Futterklemmung, einer sich durch die Riegelhülse erstreckenden Stellstange, die mittels einer Kupplungseinrichtung mit der Futterkolbenstange verbindbar ist, und mit einer zum Öffnen und Schließen der Kupplungseinrichtung in der Riegelhülse in zwei Richtungen verschiebbaren Steuerbüchse, für deren Verschiebung in Schließrichtung eine an der Stellstange abgestützte Feder und in der anderen Richtung eine zwangsläufige Betätigung vorgesehen ist.

Bei einer aus der DE-C-35 40 367 bekannten Schnellwechselvorrichtung der vorgenannten Art wird zum Lösen des mit der Spindel verbundenen Spannfutters die Riegelhülse vom Flansch weg in die Spindel hineingezogen und damit die Futterklemmung beseitigt. Gleichzeitig mit dieser Einzugsbewegung wird auch eine mechanische Kupplung zwischen der Futterkolbenstange und einer hydraulisch angetriebenen Stellstange zur Spannkraftbetätigung des Futters gelöst. Diese Kupplung umfaßt eine am vorderen Ende der Stellstange befestigte Spannhülse, deren Umfang einen Kranz von Öffnungen enthält, wobei in jeder Öffnung ein Rollkörper radial geführt ist, dessen Durchmesser größer ist als die Wandstärke der Spannhülse. Zur Betätigung der Kupplung werden die Rollkörper mit Hilfe einer außen auf der Spannhülse geführten Steuerbüchse durch den Öffnungskranz hindurch nach innen gedrückt, wo sie in eine Umfangsnut eines mit der Futterkolbenstange verbundenen Anschlußstückes eingreifen und in dieser Stellung die von Spannzylinder und Stellstange ausgeübten Betätigungskräfte auf das Spannfutter übertragen.

Bei der Einwärtsbewegung der Riegelhülse nimmt sie die federnd in eine Kupplungsbetätigungsstellung vorgespannte Steuerbüchse soweit mit, bis eine in der Steuerbüchse angeordnete Umfangsnut als Ausweichraum der Rollkörpern gegenübersteht und dadurch der Kupplungseingriff aufgehoben werden kann. Wenn die Futterkolbenstange nach vorn aus der Spannhülse herausgezogen wird, endet der Kupplungseingriff, indem die Rollkörper nach außen in die Nut der Steuerbüchse verdrängt werden.

Diese bekannte Bauart ist nachteilig, weil bei der Kraftübertragung von den verhältnismäßig kleinen, als Kupplungselemente dienenden Roll- oder Prismenkörpern hohe Flächenpressungen ausgeübt werden, so daß die Führungen in der Spannhülse, die Aufnahmenut in der Futterkolbenstange und auch die zugeordneten Betätigungsflächen an der Steuerhülse verhältnismäßig schnell verschleißen. Dies ist auch darauf zurückzuführen, daß die in der Spannhülse gehaltenen Kupplungselemente notwendig nur teilweise aus ihren Führungen herausragen und in die Aufnahmenut der Futterkolbenstange eingreifen, denn bei größerer Öffnungsweite würden die Kupplungselemente nach dem Entfernen des Spannfutters aus der Spannhülse herausfallen. Diesbezügliche Abhilfemaßnahmen in Form von an den Kupplungselementen angebrachten, seitlichen Ansätzen, die in einer Nut oder in einem Langloch den radialen Verstellweg des Kupplungselementes begrenzen, erweisen sich, wenn nicht als störungsanfällig, so doch als kompliziert und aufwendig. - Darüberhinaus müssen zur Übertragung einer ausreichenden Spannkraft die bekannten Rolloder Prismenkörper in ausreichend großer Anzahl vorgesehen sein. Da sich diese große Anzahl nur auf einem verhältnismäßig großen Umfang unterbringen läßt, erfordern die an den Kupplungs- und Entkupplungsvorgängen beteiligten Riegelhülse, Steuerbüchse und Spannhülse ungünstig große Durchmesser. Außerdem läuft der Kupplungsvorgang nicht zwangsläufig ab; vielmehr ist die Steuerbüchse lediglich in der Lage, die Rollkörper mit Hilfe der auf sie wirkenden Federkraft in die Umfangsnut der Futterkolbenstange zu verdrängen.

Eine aus der EP-A-0 238 372 bekannte Spannfutter-Schnellwechseleinrichtung für eine hohlzylindrische Spindel besteht aus einer in der Spindel verschiebbaren Riegelhülse mit äußeren Gleitführungen zur Betätigung der Futterklemmung und einer sich durch die Riegelhülse erstreckenden Stellstange, die mittels einer Kupplungseinrichtung mit der Futterkolbenstange verbindbar ist. Die Kupplungseinrichtung weist mehrere mittels einer Ringfeder in einer Umfangsnut am Ende der Stellstange festgelegte Kupplungsstücke auf, deren freie Enden radiale Vorsprünge zum Eingriff in eine Umfangsnut der Futterkolbenstange tragen.

Die Kupplungsstücke sind nahe ihrem einen Ende auf dem Umfang der Stellstange zur Ausführung von Greif- und Spreizbewegungen kippbar so abgestützt, daß die auf ihrer durch die Ringfeder verursachten Spreizstellung beim Verschieben der sie umfassenden Riegelhülse in die Schließstellung gelangen.

Dieser Schnellwechseleinrichtung haften ähnliche Nachteile wie derjenigen entsprechend dem zuerst genannten Stand der Technik an: Wenn die hier kombinierte Riegel- und Steuerhülse zum Lösen der Futterklemmung und zum Öffnen der Kupplung zurückgezogen wird, sollen die Kupplungsstücke mittels der sie umgebenden Ringfeder zu ihrer Kippbewegung und zum Öffnen der Kupplung veranlaßt werden. Diese Funktion ist jedoch unsicher, weil zwischen der radial einwärts wirkenden Federkraft und der auf der Stellstange aufliegenden Kippkante nur ein sehr kleiner ungünstiger Hebelarm zur Verfügung steht, so daß im Hinblick auf die vorhandenen Reibungskräfte und Verklemmungen aufgrund der bis dahin bestehenden formschlüssigen Kupplung die erwünschte Spreizbewegung der Kupplungsstücke mehr oder weniger behindert und dem Zufall überlassen wird. Die Bedienungsperson oder die Maschinensteuerung bleiben sich folglich im unklaren darüber, ob der Eingriff sämtlicher Kupplungsstücke wirksam beendet ist oder nicht, und man muß sich durch manuelles Probieren darüber vergewissern, ob das Futter schon gelöst ist. Ein automatischer betriebssicher ablaufender Futterwechsel ist folglich ausgeschlossen.

Nachteilig ist außerdem, daß die Kupplungsstücke mit der nahe an ihrem einen Ende angeordneten Kippkante einen erheblichen radialen Spreizhub benötigen, der die Umfangsabmessungen der Kupplungseinrichtung von vornherein so ungünstig vergrößert, daß sie nicht mehr in der Maschinenspindel Platz findet, sondern in das angeschraubte Adaptergehäuse verlegt werden muß. Außerdem befinden sich die äußeren Keilflächen an der Riegelhülse zur Betätigung der Riegelbolzen für die Futterklemmung etwa auf derstelben axialen Höhe wie die Kupplungseinrichtung, so daß auch die Abmessungen des Adaptergehäuses verhältnismäßig groß sind.

Der Erfindung liegt die Aufgabe zugrunde, eine Spannfutter-Schnellwechseleinrichtung der eingangs angegebenen Art dahingehend zu verbessern und auszugestalten, daß unter Aufrechterhaltung geringer Durchmesser der Gesamtanordnung die Kupplungs-und Entkupplungsvorgänge zwischen Futter und Maschinenspindel, insbesondere bei häufigem automatisch gesteuertem Futterwechsel störungsfrei und somit beschleunigt und mit erhöhter Betriebssicherheit ablaufen und eine dauerhaft zuverlässige Spannkraftübertragung gewährleistet ist.

Gemäß der Erfindung wird diese Aufgabe dadurch gelöst,

- daß die Kupplungseinrichtung aus mehreren klammerförmigen Kupplungsstücken besteht, die an den Enden radial einwärts weisende Vorsprünge mit bleibendem Eingriff in einer Umfangsnut der Stellstange und zum wahlweisen Eingriff in eine Umfangsnut der Futterkolbenstange tragen und mittels einer inneren Kippkante zwischen ihren Enden auf dem Umfang der Stellstange zur Ausführung zangenartiger Greif- und Spreizbewegungen abgestützt sind,
- daß die Steuerbüchse die Kupplungsstücke außen überfaßt und innere Ringnocken aufweist, von denen in Schließ- und Öffnungsstellungen der Steuerbüchse jeweils einer über dem einen oder dem anderen Ende der Kupplungsstücke liegt und diese in ihrem geschlossenen bzw. gespreizten Zustand hält,

- daß zum zwangsläufigen Verschieben der Steuerbüchse in ihre Öffnungsstellung das freie Ende des Betätigungsrohres und in die Schließstellung eine radiale Innenschulter der Riegelhülse vorgesehen sind, wobei zwischen dem Betätigungsrohr und der Riegelhülse eine Mitnehmerverbindung mit axialem Spiel besteht,
- und daß die geneigten Gleitflächen zur Betätigung der Riegelbolzen für die Futterklemmung am vorderen Ende der Riegelhülse mit Bezug auf die Kupplungseinrichtung axial versetzt angeordnet sind.

Bei dieser Bauform gewährleisten die klammerförmigen Kupplungsstücke mit ihren einwärts gerichteten Vorsprüngen einen verbesserten formschlüssigen Eingriff in die Umfangsnut der Futterkolbenstange, so daß die Zugkraftübertragung auf die flächige Anlage deren Vorsprünge in den Umfangsnuten von Stellstange und Futterkolbenstange verteilt wird. Dies steht in vorteilhaftem Gegensatz zu dem oben geschilderten Stand der Technik hinsichtlich der von den Rollkörpern ausgeübten hohen Flächenpressung.

Da das Ein- und Ausrücken der Kupplung durch das zwangsläufige Verschieben der Steuerbüchse erfolgt, sind aufgrund dieser positiv wirkenden Betätigungsmittel auch definierte Signale vorhanden, die sich leicht überwachen lassen und zur Erhöhung der Betriebssicherheit beitragen. Aufgrund dieser Eigenschaft eignet sich die erfindungsgemäße Schnellwechseleinrichtung vorteilhaft zur Anwendung in Betrieben mit weitgehend vorgeplanter, programmgesteuerter und dadurch "flexibler" Fertigung, die nur einen zeitlich begrenzten Bedarf abdeckt und größere Lagerhaltungen mit entsprechend Finanzierungskosten vermeidet. Anstatt größerer Serien werden bei dieser Fertigungsart auf der gleichen Maschine nacheinander Kleinserien oder Einzelteile hergestellt, wozu die erfindungsgemäße Schnellwechseleinrichtung einen automatisch gesteuerten Futterwechsel mit ständig zuverlässiger Spannkraftbetätigung gewährleistet. Im vorteilhaften Gegensatz zur Schnellwechseleinrichtung nach EP-A-0 238 372 befinden sich die geneigten Gleitflächen zur Betätigung der Riegelbolzen für die Futterklemmung am vorderen Ende der Riegelhülse in axial versetzter Anordnung zur Kupplungseinrichtung, so daß die Gleitflächen auf einen kleinen Durchmesser untergebracht werden können und die erwünschte kompakte Bauform möglich ist.

Gemäß einer bevorzugten Ausgestaltung der erfindungsgemäßen Schnellwechseleinrichtung fällt die Antriebsrichtung zum Verschieben der Steuerbüchse in ihre Schließstellung mit der Antriebsrichtung der Riegelhülse zur Betätigung der Riegelbolzen für die Futterklemmung zusammen. Dabei kann die Antriebsrichtung der Riegelhülse zum Zurückziehen der Riegelbolzen beim Lösen der Futterklemmung zum freien Spindelende hin gerichtet sein, und das vordere Ende der Riegelhülse kann eine Druckscheibe tragen, die bei gelöster Futterklemmung am Ende des Riegelhülsenhubes das Spannfutter zwangsläufig vom Spindelflansch wegdrückt.

In weiterer Ausgestaltung der Schnellwechselvorrichtung nach der Erfindung kann die Steuerbüchse mittels einer Druckfeder in ihre Schließstellung vorgespannt sein, die mit ihrem dem Spindelflansch zugekehrten Ende an einem Anschlag der Stellstange abgestützt ist. Die Druckfeder übernimmt folglich die Aufgabe, die zum Schließen der Kupplung zwangsläufig verschobene Steuerhülse durch Vorspannung auch dann ständig in ihrer Schließstellung zu halten, wenn die Stellstange bei geschlossener Kupplung zur Betätigung der Spannbacken des Futters hin und her bewegt wird.

Es ist weiterhin zweckmäßig, wenn die am vorderen Ende der Riegelhülse angeordneten Gleitführungen zur Betätigung der radial beweglichen Riegelbolzen derart geneigt verlaufen, daß beim Vorschieben der Riegelhülse die Riegelbolzen radial zurückgezogen werden.

Die Schnellwechseleinrichtung nach der Erfindung ist auch dadurch weitergebildet, daß das Betätigungsrohr auf der Stellstange geführt ist und daß das axiale Spiel der auf dem Betätigungsrohr angeordneten Mitnehmerverbindung für die Verschiebung der Riegelhülse so bemessen ist, daß die Riegelhülse zum Lösen der Futterklemmung erst im Anschluß an die Verschiebung der Steuerbüchse zum Öffnen der Kupplungseinrichtung bewegt wird. Dabei kann die Anordnung so getroffen sein, daß die Riegelhülse mit einem Innenbund zwischen zwei äußeren Mitnehmeranschlägen des Betätigungsrohres eingreift, wobei die Anschläge einen Abstand voneinander aufweisen, der gleich groß oder größer ist als der Weg der Steuerbüchse zwischen ihren Öffnungs- und Schließstellungen.

Eine vereinfachende Bauweise wird auch dadurch erreicht, wenn im vorderen Ende der Stellstange eine Kopfschraube eingeschraubt ist, deren Kopf und der daran anschließende Schaftabschnitt zusammen mit der Stirnfläche der Stellstange die Umfangsnut zur axialen Positionierung der Kupplungsstücke bilden.

Zu einer Bauweise mit möglichst geringem Durchmesser trägt ebenfalls bei, wenn die dem vorderen Ende der Steuerbüchse gegenüberliegende radiale Innenschulter der Riegelhülse im Bereich des vorderen Endes hinter den Führungsrippen für die Radialkeile angeordnet ist.

Gemäß einer zusätzlichen Ausgestaltung kann die zentral angeordnete Stellstange einen Luftkanal enthalten, der bis zur Kupplungseinrichtung und weiter bis zum Futter geführt ist, über den einerseits mit Hilfe von Druckluftimpulsen die Kupplungseinrichtung saubergehalten und andererseits am Futter oder Flansch eine Anlagekontrolle für Futter oder Werkstück, insbesondere mit automatischer Rückmeldung und Überwachung durchgeführt wird.

Ein Ausführungsbeispiel der Schnellwechselvorrichtung nach der Erfindung ist nachfolgend anhand eines in den Zeichnungen dargestellten Ausführungsbeispiels näher erläutert. Es zeigen, jeweils schematisch,

Fig. 1 eine Schnellwechselvorrichtung gemäß der Erfindung in einem Längsschnitt durch eine Werkzeugmaschinenspindel bei geöffneter Kupplung und zurückgezogenen Riegelbolzen,

Fig. 2 eine Ansicht des Spindelflanschs,

Fig. 3 die Schnellwechselvorrichtung in vergleichbarer Darstellung wie in Fig. 1 mit geklemmtem und gekuppeltem Spannfutter und

Fig. 4 die Vorrichtung in vergleichbarer Darstellung wie in Fig. 3, jedoch mit nach links gewegter Stellstange einschließlich Kupplung.

Die nachfolgend und in den Ansprüchen verwendeten Hinweise auf "vorn" bzw. "rückwärtig" bzw. "hinten" dienen zur vereinfachten Beschreibung in der Weise, daß sich der Spindelflansch und das dort zu verriegelnde Futter "vorn" befinden, während die in den Figuren am linken Ende der Spindel gezeigten Spann- oder Riegelbetätigungszylinder sich "hinten" befinden.

Am Endflansch 12 einer umlaufenden Maschinenspindel 10 ist ein die Ringschulter 16 am Flansch übergreifendes Adaptionsglied 14 mit Hilfe von Schrauben 18 befestigt, mit dem die Abstützbasis der Spindel für ein Spannfutter 20 verbreitert wird.

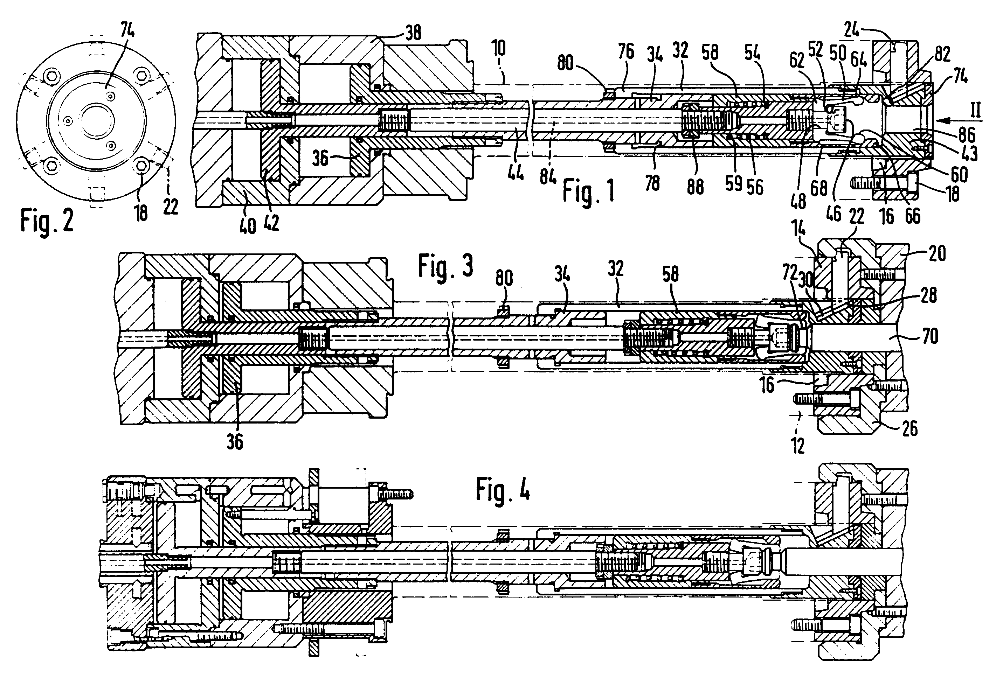

Innerhalb des Adaptionsgliedes 14 befinden sich gleichmäßig über den den Umfang verteilte, radial gerichtete Riegelbolzen 22, die in radialen Führungskanälen 24 zwischen den eingezeichneten zurückgezogenen bzw. ausgefahrenen Stellungen beweglich sind. In ihrer ausgefahrenen Stellung gemäß Fig. 3 und 4 legen sich die Riegelbolzen 22 an eine angepaßte Keilfläche eines mit dem Futter 20 verschraubten Adaptionsgliedes 26, mit dem das Futter auf den Spindelflansch bzw. dessen Adaptionsglied 14 ausgerichtet und dort in geklemmtem Zustand verriegelt gehalten wird.

Jeder Riegelbolzen 22 enthält an seinem Fuß eine nach unten offene geneigte Gleitnut 28, mit der er auf einer mit einem passenden Querschnitt, z. B. Schwalbenschwanzprofil, versehenen Führungsrippe 30 einer Riegelhülse 32 gleitet. Die Führungsrippen 30 sind aus dem vorderen verdickten Abschnitt der Riegelhülse 32 herausgearbeitet und besitzen einen zu ihrem vorderen Ende und zum Umfang hin ansteigenden Verlauf, der festlegt, daß durch Rückwärtsbewegung der Riegelhülse 32 die Riegelbolzen 22 in ihre ausgefahrene Stellung gelangen bzw. und umgekehrt.

Die Riegelhülse 32, die zwecks einfacherer Montage geteilt ausgeführt sein kann, erstreckt sich in der zentrischen Bohrung der Spindel 10 nach hinten und dort mit einer Innenschulter 76 in den Abstand zwischen zwei Anschlägen 78 und 80 eines Betätigungsrohres 34. Das Betätigungsrohr 34 ist am rückwärtigen Ende mit einem rohrförmigen Riegelkolben 36 verbunden, der innerhalb eines rohrförmigen Riegelzylinders 38 mit Hilfe eines Druckmittels verschiebbar ist. Fig. 1 zeigt den Riegelzylinder in seiner vorderen Endstellung, in der mit Hilfe der Riegelhülse 32 die Riegelbolzen 22 eingezogen sind, während gemäß Fig. 3 und 4 sich die Riegelhülse in ihrer zurückgezogenen Stellung befindet, in der er sie über die ausgefahrenen Riegelbolzen 22 das Spannfutter geklemmt hält.

Durch den Rohrkolben 36 und das Betätigungsrohr 34 erstreckt sich eine Stellstange 44, deren rückwärtiges Ende mit einem im Zylinder 40 verschiebbaren Spannkolben 42 in Verbindung steht. Spannkolben 42 und Stellstange 44 dienen zur Spannbetätigung einer die Spannbacken des Futters bewegenden Futterkolbenstange 70, die bei aufgesetztem Spannfutter 20 in einer zentralen Bohrung 86 am vorderen Ende der Riegelhülse 32 aufgenommen ist.

Auf dem aus Montagegründen geteilten und verschraubten vorderen Ende der Stellstange 44 sind in einer Umfangsnut 48 schalenförmige Kupplungsstücke 50 einer Kupplungseinrichtung axial positioniert. Die Umfangsnut 48 wird zweckmäßig zusammen mit einer Kopfschraube 46 gebildet, deren Schaft in eine zentrische Gewindebohrung der Stellstange 44 eingeschraubt ist. Durch die Stellstange 44 erstreckt sich ein Druckluftkanal 84, der auch durch die Kopfschraube 46 hindurchgeführt ist und mit dem beispielsweise mit Hilfe von Druckluftimpulsen Bearbeitungsspäne und dergleichen aus der Kupplung herausgeblasen werden. Mit Hilfe einer gegebenenfalls weitergeführten Druckluftleitung lassen sich im Futter Anlagekontrollen mit automatischer Rückmeldung zum Zweck der Überwachung durchführen.

Die rund um den Umfang der Stellstange 44 angeordneten Kupplungsstücke 50 bestehen bei einer Ausführungsform aus drei schalenförmig gewölbten Klammern, die zwischen der Öffnungsstellung gemäß Fig. 1 und der Schließstellung gemäß Fig. 3 und 4 kippbar sind, indem sie mittels einer inneren Kippkante 52 auf dem Umfang des Kopfes der Schraube 46 aufliegen. Jedes Kupplungsstück besitzt einen radial einwärts weisenden vorderen Vorsprung 60 sowie einen rückwärtigen Vorsprung 62, der in die Umfangsnut 48 paßt. Bei geöffneter Kupplung gemäß Fig. 1 werden die Kupplungsstücke 50 von einem rückwärtigen Ringnocken 68 einer Steuerbüchse 58 in einem greiferartig offenen Zustand gehalten, bei dem die an den vorderen freien Enden sitzenden Vorsprünge 60 einen Durchmesser freigeben, der mindestens demjenigen der Kopfschraube 46 entspricht.

Wenn die Futterkolbenstange 70 durch die zentrische Bohrung 86 der Riegelhülse 32 eingeführt und mit der Stellstange 44 gekuppelt werden soll, ist entsprechend dem in Fig. 1 gezeigten Betriebszustand der Schnellwechseleinrichtung die Steuerbüchse 58 zusammen mit der Riegelhülse 32 in die vorderste Endstellung verschoben. Dabei hat der sich ebenfalls in seiner rechten Endstellung befindliche Riegelkolben 36 das Betätigungsrohr 34 verschoben, das mit einem erweiterten Endabschnitt an der Steuerbüchse 58 anliegt und diese entgegen der Kraft der Feder 56 von ihrem Anschlag 88 auf der Stellstange 44 abgehoben hat. Die Feder 56 stützt sich an einem rückwärts gerichteten Anschlag 54 der Stellstange 44 ab und drückt mit ihrem anderen Ende gegen eine gegenüberliegende innere Stirnfläche 59 der Steuerbüchse 58.

In Verbindung mit der Kupplungseinrichtung bildet die Steuerbüchse 58 einen für den Aufbau und die Funktion der erfindungsgemäßen Schnellwechseleinrichtung wichtigen Bauteil, der zwecks vereinfachter Herrstellung und Montage entsprechend der Zeichnung geteilt und zusammenschraubbar ausgeführt sein kann. Zwischen den vorderen und rückwärtigen radial einwärts weisenden Ringnocken 66 und 68 besteht in der Steuerbüchse 58 eine längliche Ausnehmung, die durch die schrägen Anlaufflächen der Ringnocken begrenzt ist und deren Länge erkennbar kleiner ist als die Gesamtlänge der Kupplungsstücke 50. Aus dieser Längendifferenz folgt, daß die Kupplungsstücke 50, die niemals vollständig in die längliche Ausnehmung der Steuerbüchse hineinpassen, je nachdem von dem einen oder anderen Ringnocken 66 bzw. 68 in die eine oder andere Richtung gekippt werden, um so die Öffnungsstellung der Kupplung gemäß Fig. 1 oder die Schließstellung der Kupplung gemäß Fig. 3 und 4 zu verwirklichen. Obwohl nicht gezeigt, versteht sich, daß den Anlaufschrägen der Ringnocken 66 und 68 geneigte oder abgerundete Gleitflächen an den Kupplungsstücken 50 zugeordnet sind, um eine reibungsarme, glatte Schließ- und Öffnungsbewegung der Kupplungsstücke zu gewährleisten.

Wenn ein neues Spannfutter auf den Spindelflansch aufgesetzt worden ist, gelangen die vorderen Vorsprünge 60 der Kupplungsstücke 50 nach Art einer Klammer oder eines Greifers in einen definierten Eingriff mit einer Umfangsnut 72 der Futterkolbenstange 70, während der rückwärtige Vorsprung 62 der Kupplungsstücke weiterhin in der Umfangsnut 48 der Stellstange positioniert bleibt. Dieser Kupplungsvorgang kann mit Hilfe der Steuerbüchse 58 zwangsläufig dadurch eingeleitet werden, daß die Riegelhülse 32 aus der Öffnungsstellung gemäß Fig. 1 mit Hilfe des Riegelzylinders 36 und des Betätigungsrohres 34 zurückgezogen wird, wobei die Riegelbolzen 22 nach außen gleiten und eine Innenschulter 82 der Riegelhülse 32 die Steuerbüchse 58 über die Kupplungseinrichtung hinweg nach links verschiebt. Dabei läuft die Schrägfläche des vorderen Ringnockens 66 gegen das vordere Ende der Kupplungsstücke 50 und bewirkt deren Kippbewegung.

Die das Schließen der Kupplung bewirkende Bewegung der Steuerbüchse 58 kann allein auch durch die Feder 56 veranlaßt werden, sobald das Betätigungsrohr aus der Stellung gemäß Fig. 1 in die nach Fig. 3 verschoben wird, wobei auf diesem Weg der Anschlag 78 des Betätigungsrohres 34 die Riegelhülse 32 erst zu einer Zeit erfaßt, wenn die Steuerbüchse 58 mit ihrem rückwärtigen Ende bereits am Anschlag 88 der Stellstange 44 anliegt. Auf diese Weise wird die klammerartige Kupplung 2 zum Erfassen der Futterkolbenstange 70 bereits geschlossen, bevor das Futter mit Hilfe der Riegelbolzen 22 auf dem Spindelflansch geklemmt wird.

Um ein Spannfutter von der Spindel zu lösen, vollzieht sich die vorbeschriebene Ablaufsfolge in umgekehrter Richtung, d. h. der Riegelkolben 36 wird zusammen mit der Betätigungsstange 34 aus der Stellung gemäß Fig. 3 oder 4 nach rechts bewegt, wobei über den Anschlag 80 die Riegelhülse 32 nach rechts verschoben wird , um durch Rückbewegen der radialen Riegelbolzen 22 die Futterklemmung zu lösen. Durch Anlage der Stirnfläche des nach rechts bewegten Betätigungsrohres 34 an der Steuerbüchse 58 gelangt diese in ihre in Fig. 1 gezeigte Öffnungsstellung, so daß sie sich gegenüber der Stellstange 44 verschiebt und die Kupplungszange öffnet, wodurch die Futterkolbenstange 70 freikommt. Somit erfolgt die Betätigung auch in Richtung zum Öffnen der Kupplung nicht mit einer unkontrollierbaren Vorspannung, sondern mit einem auf die Hydraulikzylinder wirkenden, definierten Signal, mit dem sich die Betriebssicherheit der Maschinenanlage überwachen läßt.

Bei der Betätigung der Riegelbolzen 22 und der Kupplungsstücke 50 sollte für die Funktionen des Lösen bzw. Öffnen wenigstens insoweit eine Gleichlaufabstimmung vorgesehen sein, daß die Kupplung - schon geöffnet - und die Futterverriegelung durch Zurückziehen der Riegelbolzen schon beseitigt ist, wenn die von an der Riegelhülse 32 befetigte Druckscheibe 74 das abzubauende Spannfutter 20 berührt und es leicht wegdrückt (vgl. Stellung in Fig. 1), so daß das Spannfutter nunmehr leicht von Hand oder einer Zubringervorrichtung abgenommen werden kann.

Bezugszeichenliste

| | | |
|---|---|---|
| 10 - | Spindel | |
| 12 - | Spindelflansch | |
| 14 - | Adaptionsglied an Spindel | |
| 16 - | Ringschulter am Flansch | |
| 18 - | Verbindungsschraube | |
| 20 - | Futter | |
| 22 - | Radiale Riegelbolzen | |
| 24 - | Radiale Führungskanäle | |
| 26 - | Adapter am Futter | |
| 28 - | Gleitnuten im Riegelbolzenfuß | |
| 30 - | Führungsrippen für 28 | |
| 32 - | Riegelhülse | |
| 34 - | Betätigungsrohr | |
| 36 - | Kolben von 34 | |
| 38 - | Riegelzylinder | |
| 40 - | Spannzylinder | |
| 42 - | Spannkolben | |
| 44 - | Stellstange | |
| 46 - | Kopfschraube in 44 | |
| 48 - | Umfangsnut in Stellstange | |
| 50 - | Kupplungselemente | |
| 52 - | Kippkante | |
| 54 - | Anschlag für Feder | |
| 56 - | Druckfeder | |
| 58 - | Steuer- und Verschlußbüchse | |
| 59 - | innere Stirnfläche von 58 | |
| 60 - | Vorsprünge an Kupplungsstück 50 vorn | |
| 62 - | Vorsprung an Kupplungsstück 50 hinten | |
| 64 - | äußerer Gelitfächenabschnitt auf 50 | |
| 66 - | Ringnocken an 58 vorn | |
| 68 - | Ringnochen an 5o hinten | |
| 70 - | Futterkolbenstange | |
| 72 - | Umfangsnut in 70 | |
| 74 - | Druckscheibe an 32 | |
| 76 - | Innenschulter an 32 | |
| 78 - | vorderer Anschlag auf 34 | |
| 80 - | hinterer Anschlag auf 34 | |
| 82 - | Innenschulter an 32 | |
| 84 - | Luftkanal | |
| 86 - | zentrische Bohrung in 43 | |
| 88 - | Anschlag auf 44 | |

**Patentansprüche**

1. Spannfutter-Schnellwechseleinrichtung für eine hohlzylindrische Spindel (10), mit einer in der Spindel von einem Betätigungsrohr (34) verschiebbaren Riegelhülse (32) mit geneigten Gleitflächen zur Betätigung von radial beweglichen Riegelbolzen (22) für die Futterklemmung, einer sich durch die Riegelhülse (32) erstreckenden Stellstange (44), die mittels einer Kupplungseinrichtung mit der Futterkolbenstange (70) verbindbar ist, und mit einer zum Öffnen und Schließen der Kupplungseinrichtung in der Riegelhülse (32) in zwei Richtungen verschiebbaren Steuerbüchse (58), für deren Verschiebung in Schließrichtung eine an der Stellstange (44) abgestützte Feder (56) und in der anderen Richtung eine zwangsläufige Betätigung vorgesehen ist,
**dadurch gekennzeichnet,**

- daß die Kupplungseinrichtung aus mehreren klammerförmigen Kupplungsstücken (50) besteht, die an den Enden radial einwärts weisende Vorsprünge (60, 62) mit bleibendem Eingriff in einer Umfangsnut (48) der Stellstange (44) und zum wahlweisen Eingriff in eine Umfangsnut (72) der Futterkolbenstange (70) tragen und mittels einer inneren Kippkante (52) zwischen ihren Enden auf dem Umfang der Stellstange (44) zur Ausführung zangenartiger Greif- und Spreizbewegungen abgestützt sind,

- daß die Steuerbüchse (58) die Kupplungsstücke (50) außen überfaßt und innere Ringnocken (66, 68) aufweist, von denen in Schließ- und Öffnungsstellungen der Steuerbüchse (58) jeweils einer über dem einen oder dem anderen Ende der Kupplungsstücke (50) liegt und diese in ihrem geschlossenen bzw. gespreizten Zustand hält,

- daß zum zwangsläufigen Verschieben der Steuerbüchse (58) in ihre Öffnungsstellung das freie Ende des Betätigungsrohres (34) und in die Schließstellung eine radiale Innenschulter (82) der Riegelhülse (32) vorgesehen sind, wobei zwischen dem Betätigungsrohr (34) und der Riegelhülse (32) eine Mitnehmerverbindung (78, 80) mit axialem Spiel besteht,

- und daß die geneigten Gleitflächen (30) zur Betätigung der Riegelbolzen (22) für die Futterklemmung am vorderen Ende der Riegelhülse (32) mit Bezug auf die Kupplungseinrichtung axial versetzt angeordnet sind.

2. Schnellwechseleinrichtung nach Anspruch 1, dadurch gekennzeichnet, daß die Antriebsrichtung zum Verschieben der Steuerbüchse (58) in ihre Schließstellung mit der Antriebsrichtung der Riegelhülse (32) zur Betätigung der Riegelbolzen (22) für die Futterklemmung zusammenfällt.

3. Schnellwechseleinrichtung nach Anspruch 1 oder 2, dadurch gekennzeichnet, daß die Antriebsrichtung der Riegelhülse (32) zum Zurückziehen der Riegelbolzen (22) beim Lösen der Futterklemmung zum freien Spindelende hin gerichtet ist und daß das vordere Ende der Riegelhülse (32) eine Druckscheibe (74) trägt, die bei gelöster Futterklemmung am Ende des Riegelhülsenhubes das Spannfutter (20) zwangsläufig vom Spindelflansch (12) wegdrückt.

4. Schnellwechseleinrichtung nach einem der vorhergehenden Ansprüche, dadurch gekennzeichnet, daß die Steuerbüchse (58) mittels einer Druckfeder (56) in ihre Schließstellung vorgespannt ist, die mit ihrem dem Spindelflansch (12) zugekehrten Ende an einem Anschlag (54) der Stellstange (44) abgestützt ist.

5. Schnellwechseleinrichtung nach einem der vorhergehenden Ansprüche, dadurch gekennzeichnet, daß die am vorderen Ende der Riegelhülse (32) angeordneten Gleitführungen (30) zur Betätigung der radial beweglichen Riegelbolzen (22) derart geneigt verlaufen, daß beim Vorschieben der Riegelhülse (32) die Riegelbolzen (22) radial zurückgezogen werden.

6. Schnellwechseleinrichtung nach einem der vorhergehenden Ansprüche, dadurch gekennzeichnet, daß das Betätigungsrohr (34) auf der Stellstange (44) geführt ist und daß das axiale Spiel der auf dem Betätigungsrohr angeordneten Mitnehmerverbindung (78, 80) für die Verschiebung der Riegelhülse (32) so bemessen ist, daß die Riegelhülse (32) zum Lösen der Futterklemmung erst im Anschluß an die Verschiebung der Steuerbüchse (58) zum Öffnen der Kupplungseinrichtung bewegt wird.

7. Schnellwechseleinrichtung nach einem der vorhergehenden Ansprüche, dadurch gekennzeichnet, daß die Riegelhülse (32) mit einem Innenbund (76) zwischen zwei äußeren Mitnehmeranschlägen (78, 80) des Betätigungsrohres (34) eingreift, wobei die Anschläge (78, 80) einen Abstand voneinander aufweisen, der gleich groß oder größer ist als der Weg der Steuerbüchse (58) zwischen ihrer Öffnungs- und Schließstellungen.

8. Schnellwechseleinrichtung nach einem der vorhergehenden Ansprüche, dadurch gekennzeichnet, daß im vorderen Ende der Stellstange (44) eine Kopfschraube (46) eingeschraubt ist, deren Kopf und der daran anschließende Schaftabschnitt zusammen mit der Stirnfläche der Stellstange die Umfangsnut (48) zur axialen Positionierung der Kupplungsstücke (50) bilden.

9. Schnellwechseleinrichtung nach einem der vorhergehenden Ansprüche, dadurch gekennzeichnet, daß die dem vorderen Ende der Steuerbüchse (58) gegenüberliegende radiale Innenschulter (82) der Riegelhülse (32) im Bereich deren vorderen Endes hinter den Führungsrippen (30) für die Radialkeile (22) angeordnet ist.

10. Schnellwechseleinrichtung nach einem der vorhergehenden Ansprüche, dadurch gekennzeichnet, daß die zentral angeordnete Stellstange (44) einen Luftkanal (84) enthält, der bis zur Kupplungseinrichtung und weiter bis zum Futter geführt ist, über den einerseits mit Hilfe von Druckluftimpulsen die Kupplungseinrichtung saubergehalten und andererseits am Futter (20) oder Flansch (12) eine Anlagekontrolle für Futter oder Werkstück, insbesondere mit automatischer Rückmeldung und Überwachung durchgeführt wird.

**Claims**

1. Quick change attachment for clamping chucks on a hollow-cylindrical spindle (10) comprising a locking bush (32), which is shiftable within said spindle by means of an actuating tube (34) and has inclined slide surfaces for actuating radial locking bars (22) to clamp a chuck, an adjusting rod (44) extending through the locking bush (32) and adapted to be connected to a chuck piston rod (70) by means of a coupling device, and a control bush (58) shiftable within said locking bush (32) in two directions to open and close said coupling device, a spring (56) being supported by said actuating rod (44) and provided to shift the control bush into its closing direction, and positive actuating means being provided to shift the control bush into the opposite direction, characterized in that
   - the coupling device consists of several clamp-shaped coupling pieces (50), which at their ends have radially directed inner projections (60, 62) for permanent engagement with a circumferential groove (48) of the actuating rod (44) and for optional engagement with a circumferential groove (72) of the chuck piston rod (70), and which by means of an inner tilting edge (52) in between their ends are supported on the circumference of the actuating rod (44) for carrying out plier-like gripping and spreading movements,
   - the control bush (58) embraces said coupling pieces (50) at their outer side and comprises inner annular cams (66, 68), of which one each lies over one or the other end of the coupling pieces (50) in the closing or opening positions of the control bush (58) and keeps them in their closed or open state, respectively,
   - the free end of the actuating tube (34) and a radial inner shoulder (82) of the locking bush (32) are provided for positive shifting the control bush (58) into its open and into its closed positions. respectively, an entrainment connection (78, 80) including axial clearance being provided between the actuating tube (34) and the locking bush (32),
   - and in that the inclined slide surfaces (30) for actuating the locking bars (22) to clamp a chuck are disposed at the front end of the locking bush (32) and axially displaced with respect to the coupling device.

2. Quick change attachment according to claim 1, characterized in that the drive direction for shifting the control bush (58) into its closing position co-incides with the drive direction of the locking bush (32) for actuating the locking bars (22) to clamp a chuck.

3. Quick change attachment according to claim 1 or 2, characterized in that the drive direction of the locking bush (32) for retracting the locking bars (22) to release the chuck clamp points toward the spindle's free end, and in that the front end of the locking bush (32) supports a pressure disc (74) which positively pushes the chuck (20) off the spindle's flange (12), when the chuck clamp is released at the end of the shift of the locking bush.

4. Quick change attachment according to one of the preceding claims, characterized in that the control bush (58) is biased into its closing position by means of a compression spring (56), which at its end facing the spindle's flange (12) is supported by a stop (54) of the actuating rod (44).

5. Quick change attachment according to one of the preceding claims, characterized in that the slide guides (30) disposed at the front end of the locking bush (32) and to actuate the radially movable locking bars (22) are inclined such that the locking bars (22) are radially retracted during advancing of the locking bush (32).

6. Quick change attachment according to one of the preceding claims, characterized in that the actuating tube (34) is guided on the actuating rod (44), and in that the axial clearance of the entrainment connection (78, 80) disposed on the actuating tube for shifting the locking bush (32) is dimensioned such that the locking bush (32) will be moved to release the chuck clamping not until the control bush (58) has become shifted to open the coupling device.

7. Quick change attachment according to one of the preceding claims, characterized in that an inner collar (76) of the locking bush (32) engages the actuating tube (34) between two external stops (78, 80) with a gap between the stops (78, 80) being as large as or larger than the path of the control bush (58) between its opening and closing positions.

8. Quick change attachment according to one of the preceding claims, characterized in that a cap screw (46) is screwed into the front end of the actuating rod (44) such that the cap and the section of shaft adjacent to it together with the face of the adjusting rod form the circumferential groove (48) for axial positioning of the coupling pieces (50).

9. Quick change attachment according to one of the preceding claims, characterized in that the radial internal shoulder (82) of the locking bush (32) is disposed within the area of its front end and rearwardly from the guide ribs (30) for the radial bars (22) and oppositely to the front end of the control bush (58).

10. Quick change attachment according to one of the preceding claims, characterized in that the centrally disposed adjusting rod (44) contains an air channel (84) which is routed up to the coupling device and further to the chuck, and by which the coupling device is kept clean by means of pulses of compressed air, and additionally a matching check for the chuck (20) or workpiece is conducted at the chuck (20) or flange (12), particularly with automatic remote indication and monitoring.

**Revendications**

1. Dispositif d'échange rapide de mandrin de serrage pour une broche cylindrique creuse (10), comportant une douille de verrouillage (32) pouvant se déplacer dans la broche sous l'action d'un tube de commande (34) comportant des surfaces de glissement inclinées pour agir sur des axes de verrouillage (22) mobiles radialement pour le blocage du mandrin, une tige de réglage (44), s'étendant le long de la douille de verrouillage et qui peut être reliée, au moyen d'un dispositif d'accouplement, à la tige de piston du mandrin (70), et comportant une douille de commande (58) pouvant coulisser dans deux directions dans la douille de verrouillage (32) pour ouvrir et fermer le dispositif d'accouplement, étant entendu que, pour le coulissement de la douille de commande (58) dans le sens de la fermeture, il est prévu un ressort (56) prenant appui sur la tige de positionnement (44) et que, pour le coulissement dans l'autre direction, il est prévu un fonctionnement commandé, caractérisé en ce que

- le dispositif d'accouplement est constitué de plusieurs pièces d'accouplement (50) en forme de pinces, portant à leurs extrémités des saillies (60, 62) tournées radialement vers l'intérieur, avec prise permanente dans une rainure périphérique (48) de la tige de positionnement (44) et, avec prise commandée, dans une rainure périphérique (72) de la tige de piston du mandrin (70) et prenant appui, au moyen d'une arête intérieure de basculement (52) entre leurs extrémités, sur la périphérie de la tige de positionnement (44) pour exécuter des mouvements d'engagement et d'écartement,

- la douille de commande (58) recouvre extérieurement les pièces d'accouplement (50) et présente des bossages annulaires (66, 68) intérieurs, dont, en position de fermeture et d'ouverture de la douille de commande (58), chacun se trouve au dessus de l'une ou de l'autre extrémité des pièces d'accouplement (50) et les maintient soit dans leur position fermée soit dans leur position écartée,

- il est prévu, pour contraindre la douille de commande (58) à coulisser dans sa position d'ouverture, l'extrémité libre du tube de commande (34), et, pour la contraindre à coulisser dans la position de fermeture, un épaulement intérieur radial (82) de la douille de verrouillage (32), étant entendu qu'entre le tube de commande (34) et la douille de verrouillage (32), est réalisée une liaison par des organes d'entraînement (78, 80), comportant un jeu axial,

- les surfaces de glissement inclinées (30) pour actionner les axes de verrouillage (22) pour le blocage du mandrin sont disposées à l'extrémité avant de la douille de verrouillage (32), décalées axialement par rapport au dispositif d'accouplement.

2.  Dispositif d'échange rapide suivant la revendication 1, caractérisé en ce que la direction d'entraînement faisant coulisser la douille de commande (58), dans sa position de fermeture, coïncide avec la direction d'entraînement de la douille de verrouillage (32) actionnant les axes de verrouillage (22) pour le blocage du mandrin.

3.  Dispositif d'échange rapide suivant la revendication 1 ou la revendication 2, caractérisé en ce que la direction d'entraînement de la douille de verrouillage (32) faisant revenir en arrière les axes de verrouillage (22), quand on libère le blocage du mandrin, est orientée vers l'extrémité libre de la broche et en ce que l'extrémité avant de la douille de verrouillage (32) porte une rondelle de pression (74) qui, lorsque le blocage du mandrin est libéré, contraint le mandrin de serrage (20) à s'écarter de la bride (12) de la broche, à la fin de la course de la douille de verrouillage.

4.  Dispositif d'échange rapide suivant l'une quelconque des revendications précédentes, caractérisé en ce que la douille de commande (58) est mise en serrage au moyen d'un ressort de pression (56) dans sa position de fermeture, ce ressort s'appuyant, avec son extrémité tournée vers la bride (12) de la broche, sur une butée (54) de la tige de positionnement (44).

5.  Dispositif d'échange rapide suivant l'une quelconque des revendications précédentes, caractérisé en ce que les guides de glissement (30) disposés à l'extrémité avant de la douille de verrouillage (32) agissant sur les axes de verrouillage (22) mobiles radialement, sont inclinés de telle façon que, lors du coulissement en avant de la douille de verrouillage (32), les axes de verrouillage (22) sont reculés radialement en arrière.

6.  Dispositif d'échange rapide suivant l'une quelconque des revendications précédentes, caractérisé en ce que le tube de commande (34) est guidé sur la tige de positionnement (44), et en ce que le jeu axial de la liaison d'entraînement (78, 80), disposée sur le tube de commande, pour faire coulisser la douille de verrouillage (32), est dimensionné de telle façon que la douille de verrouillage (32) pour libérer le blocage du mandrin est déplacée seulement en liaison avec le coulissement ouvrant le dispositif d'accouplement.

7.  Dispositif d'échange rapide suivant l'une quelconque des revendications précédentes, caractérisé en ce que la douille de verrouillage (32), avec sa collerette intérieure (76), fait prise entre deux butées extérieures d'entraînement (78, 80) du tube de commande (34), les butées (78, 80) présentant entre elles une distance égale ou plus grande que la course de la douille de commande (58) entre ses positions d'ouverture et de fermeture.

8.  Dispositif d'échange rapide suivant l'une quelconque des revendications précédentes, caractérisé en ce qu'à l'extrémité avant de la tige de positionnement (44) est vissée une vis à tête (46), dont la tête et le tronçon de tige qui lui est raccordé forment, avec la surface du bout de la tige de positionnement, la rainure périphérique (48) servant au positionnement axial des pièces d'accouplement (50).

9.  Dispositif d'échange rapide suivant l'une quelconque des revendications précédentes, caractérisé en ce que l'épaulement radial intérieur (82) de la douille de verrouillage (32), se trouvant en face de l'extrémité avant de la douille de commande (58), dans la zone de son extrémité avant, est disposé en arrière des nervures de coulissement (30) pour les cales radiales (22).

10.  Dispositif d'échange rapide suivant l'une quelconque des revendications précédentes, caractérisé en ce que la tige de positionnement (44), disposée au centre, comporte un canal (84) pour l'air comprimé, canal qui est prolongé jusqu'au dispositif d'accouplement et, plus loin, jusqu'au mandrin, et au moyen duquel, d'une part,, à l'aide d'impulsions d'air comprimé, on maintient nettoyé le dispositif d'accouplement et, d'autre part, on effectue sur le mandrin (20) ou la bride (12), un contrôle de contact pour le mandrin ou l'outil, en particulier avec information en retour et surveillance.

Fig. 1

Fig. 2

Fig. 3

Fig. 4